# EUROPEAN PATENT APPLICATION

(11) **EP 3 527 622 A1**
(43) Date of publication of application: **21.08.2019**
(21) Application number: 17860935.0
(22) Date of filing: 11.10.2017
(51) Int. Cl.: C08L 67/02, C08K 3/00, C08K 7/14, C08L 25/04, C08L 51/06

(54) **RESIN COMPOSITION AND MOLDED ARTICLE**

(30) Priority: 14.10.2016 JP 2016202818
(71) Applicant: Mitsui Chemicals, Inc., Minato-ku Tokyo 105-7122 (JP)
(72) Inventor: TAKAHASHI, Yosuke, Chiba 299-0265 (JP); MATSUNAGA, Koji, Chiba 299-0265 (JP); KAWABE, Kuniaki, Chiba 299-0265 (JP); KANAYA, Hirotaka, Chiba 299-0265 (JP)
(74) Representative: Hoffmann Eitle
(86) International application number: PCT/JP2017/036814
(87) International publication number: WO 2018/070424

(57) **Abstract**

The purpose of the present invention is to provide a polyester resin composition which exhibits excellent shock resistance, tensile strength, modulus of elasticity, and molding properties. This resin composition contains 50-95 parts by mass of a polyester resin (A), 0.5-10 parts by mass of a polymer (B), and 5-40 parts by mass of an inorganic filler (C), wherein (A) satisfies (A-1) and (A-2), and (B) satisfies (B-1) and (B-2). (A-1) Contains a constituent unit (a1) derived from an aromatic dicarboxylic acid, and a constituent unit (a2) derived from a C2-10 diol. (A-2) The melting point (Tm) according to DSC is in the range of 200-245°C. (B-1) The melt viscosity at 160°C is 10-10,000mPa·s. (B-2) Contains 5-100 mass% of a constituent unit derived from a styrene compound.

## Description

### Technical Field

The present invention relates to a resin composition having a specific constitution, and a molded article obtained from the resin composition.

### Background Art

Polyester resins such as polybutylene terephthalate are widely used for injection molding. It is known that the mechanical strength and heat resistance of such resins are enhanced when an inorganic filler such as a glass fiber is contained.

### Citation List

### Patent Literature

PTL 1
Japanese Patent Application Laid-Open No. H10-60242

### Summary of Invention

### Technical Problem

It has been confirmed that a polyester resin composition containing an inorganic filler such as a glass fiber tends to be easily brittle broken in a stress concentration region depending on the shape of a molded product, in particular, when the amount of the filler compounded is relatively large. Examples of a resin that is compounded to a polyester resin to thereby exert an effect of modifying impact resistance include an ethylene/glycidyl methacrylate copolymer, but the effect of modifying impact resistance is not sufficient in some cases. Alternatively, the amount compounded is needed to be increased in order to increase the effect of modification, and in such a case, tensile strength, elastic modulus, molding processability, and/or the like may be sacrificed.

An object of the present invention is to provide a polyester resin composition excellent in impact resistance, and also excellent in tensile strength, elastic modulus and molding processability, as well as a molded article obtained therefrom.

### Solution to Problem

The present inventors have made intensive studies in order to solve the above problems. As a result, the present inventors have found that the above problems can be solved using a resin composition having a specific constitution, leading to completion of the present invention.

Specifically, the present invention relates to the following resin composition and molded article obtainable from the resin composition.
[1] A resin composition containing a polyester resin (A), a polymer (B), and an inorganic filler (C), wherein
   the resin composition comprises 50 to 95 parts by mass of (A), 0.5 to 10 parts by mass of (B), and 5 to 40 parts by mass of (C), provided that a total content of (A), (B) and (C) is 100 parts by mass,
   (A) satisfies the following (A-1) and (A-2), and
   (B) satisfies the following (B-1) and (B-2),
   (A-1) an aromatic dicarboxylic acid-derived constituent unit (a1) and a C₂₋₁₀ diol-derived constituent unit (a2) are contained, and
   (A-2) a melting point (Tm) according to a differential scanning calorimeter (DSC) falls within the range of 200 to 245°C;
   (B-1) a melt viscosity at 160°C is 10 to 10,000 mPa·s, and
   (B-2) 5 to 100mass% of a styrene compound-derived constituent unit is contained.
[2] The resin composition according to [1], wherein (B) is a styrene compound-modified product of a homopolymer or copolymer of at least one selected from ethylene and C₃₋₁₂ α-olefin, and satisfies the following (B-3),
   (B-3) 10 to 70mass% of a styrene compound-derived constituent unit is contained.
[3] The resin composition according to [1], wherein (B) is a styrene-modified product of a copolymer of ethylene and at least one α-olefin selected from C₃₋₁₂ α-olefin, and satisfies the following (B-3'),
   (B-3') 50 to 70mass% of a styrene-derived constituent unit is contained.
[4] The resin composition according to any one of [1] to [3], containing a glass fiber as (C).
[5] The resin composition according to any one of [1] to [4], containing polybutylene terephthalate as (A).
[6] The resin composition according to any one of [1] to [5], comprising 55 to 80 parts by mass of (A), 2 to 5 parts by mass of (B), and 20 to 40 parts by mass of (C), provided that a total content of (A), (B) and (C) is 100 parts by mass.
[7] The resin composition according to any one of [1] to [6], wherein a content of copolymer (D) having an olefin-derived structural unit, an α,β-unsaturated carboxylic acid ester-derived structural unit, and a structural unit having a cyclic oxyhydrocarbon structure is less than 3 parts by mass based on 100 parts by mass of the total content of (A), (B), and (C).
[8] A molded article comprising the resin composition according to any one of [1] to [7].

### Advantageous Effects of Invention

According to the present invention, there can be provided a polyester resin composition excellent in impact resistance, and also excellent in tensile strength, elastic modulus and molding processability, as well as a molded article obtained therefrom.

### Brief Description of Drawings

FIG. 1 illustrates a graph plotting a relationship between the Charpy impact strength at 23°C and the bending elastic modulus of each of the resin compositions obtained in Examples and Comparative Examples; and
FIG. 2 illustrates a graph plotting a relationship between the Charpy impact strength at -30°C and the bending elastic modulus of each of the resin compositions obtained in Examples and Comparative Examples.

### Description of Embodiments

Hereinafter, the resin composition of the present invention, and a molded article obtained therefrom will be described in detail.

### A. Resin Composition

The resin composition of the present invention contains polyester resin (A), polymer (B), and inorganic filler (C).

Provided that the total content of (A), (B) and inorganic filler (C) in the resin composition of the present invention is 100 parts by mass, the amount of (A) is 50 to 95 parts by mass, preferably 50 to 94.5 parts by mass, more preferably 55 to 80 parts by mass. The amount of (B) is 0.5 to 10 parts by mass, preferably 2 to 5 parts by mass. The amount of inorganic filler (C) is 5 to 40 parts by mass, preferably 20 to 40 parts by mass.

When the amount of polymer (B) falls within the above range, impact resistance of a resin composition obtained can be enhanced. Moreover, molding processability of the resin composition can also be enhanced. Polymer (B) enhances impact resistance of the resin composition, as described below, and can achieve an effect of enhancing the impact resistance even if the amount of (B) in the composition is not so large. Therefore, the loss of tensile strength and/or elastic modulus of the resin composition due to addition of polymer (B) can be decreased.

Hereinafter, each component and each requirement will be described.

### 1. Polyester Resin (A)

The resin composition of the present invention may include only one polyester resin (A), or may include two or more polyester resins (A), provided that the following requirements (A-1) and (A-2) are satisfied.

Requirement (A-1): an aromatic dicarboxylic acid-derived constituent unit (a1) and a C₂₋₁₀ diol-derived constituent unit (a2) are contained.

A polyester resin that satisfies requirement (A-1) is preferable because such a resin is excellent in mechanical properties, heat resistance, processability, and electric properties.

An aromatic dicarboxylic acid-derived constituent unit (a1) (hereinafter, sometimes simply referred to as "constituent unit (a1)".) is specifically a constituent unit constitutionally having a structure where -OH is removed from each of two carboxyl groups contained in the aromatic dicarboxylic acid. Such an aromatic dicarboxylic acid may be used singly or in combinations of two or more thereof, and specific examples include terephthalic acid, isophthalic acid, 2-methylterephthalic acid, and naphthalenedicarboxylic acid.

In particular, terephthalic acid is preferable from the viewpoint of more enhancements in mechanical properties and processability.

A C₂₋₁₀ diol-derived constituent unit (a2) (hereinafter, sometimes simply referred to as "constituent unit (a2)".) is specifically a constituent unit constitutionally having a structure where -H is removed from two hydroxyl groups contained in the C₂₋₁₀ diol. Such a C₂₋₁₀ diol may be used singly or in combinations of two or more thereof, and the following compounds can be specifically exemplified.

Examples of the C₂₋₁₀ diol include C₂₋₁₀ aliphatic diols. Examples of such aliphatic diols include 1,2-ethanediol (ethylene glycol: C₂), 1,3-propanediol (trimethylene glycol: C₃), 1,2-propanediol (propylene glycol: C₃), 1,4-butanediol (tetramethylene glycol: C₄), 2,2-dimethylpropane-1,3-diol (neopentyl glycol: C₅), 1,6-hexanediol (hexamethylene glycol: C₆), 1,8-octanediol (octamethylene glycol: C₈), and 1,9-nonanediol (nonamethylene glycol: C₉).

The C₂₋₁₀ diol may also be a diol having an alkyl group in a side chain (hereinafter, also referred to as "side-chain alkyl group-containing glycol".). Examples of the side-chain alkyl group-containing glycol include 2-methyl-1,3-propanediol, 2-ethyl-1,3-propanediol, 2-hexyl-1,3-propanediol, 2-hexyl-1,6-propanediol, neopentyl glycol, 2-ethyl-2-methyl-1,3-propanediol, 2,2-diethyl-1,3-propanediol, 2-methyl-2-n-butyl-1,3-propanediol, 1,3-nonanediol, and 2-methyl-1,8-octanediol.

In particular, 1,4-butanediol is preferable from the viewpoint of a more increase in crystallization rate.

The molar ratio ((a1)/(a2)) of constituent unit (a1) and constituent unit (a2) preferably falls within the range of 0.9 to 1.1 from the viewpoint of more enhancements in mechanical properties, heat resistance, processability, and electric properties

Polyester resin (A) is preferably constituted from only constituent units (a1) and (a2), and may contain other polyvalent carboxylic acid- and polyhydric alcohol-derived constituent units as long as the effects of the present invention are not remarkably impaired. Examples of such other polyvalent carboxylic acid include various dicarboxylic acids, for example, aliphatic dicarboxylic acids such as malonic acid, oxalic acid, succinic acid, glutaric acid, adipic acid, pimelic acid, suberic acid, azelaic acid, sebacic acid, and undecadicarboxylic acid; furandicarboxylic acids such as 2,5-furandicarboxylic acid; and alicyclic dicarboxylic acids such as 1,4-cyclohexanedicarboxylic acid and 1,3-cyclohexanedicarboxylic acid, and carboxylic acid ester thereof. Examples of such other polyhydric alcohol include tri- or higher polyhydric alcohols such as aromatic diol, trimethylolethane, and glycerin; tri- or higher polyvalent carboxylic acids such as butanetricarboxylic acid and trimellitic acid; and oxydicarboxylic acids such as 4-hydroxyphthalic acid.

The content of such other constituent unit(s) is preferably 20mol% or less, more preferably 10mol% or less, particularly preferably 5mol% or less based on 100mol% of the total of constituent units (a1) and (a2) and such other constituent unit(s).

Requirement (A-2): the melting point (Tm) according to a differential scanning calorimeter (DSC) falls within the range of 200 to 245°C. The melting point (Tm) of polyester resin (A) preferably falls within the range of 210 to 240°C, more preferably 215 to 235°C.

When the melting point (Tm) is 245°C or less, the processing temperature is not a high temperature, and a reduction in molecular weight due to heat in kneading and/or molding of the resin composition can be suppressed. When the melting point (Tm) is 200°C or more, the heat distortion temperature of the polyester resin is high, and heat resistance is improved.

Polyester resin (A) may also be modified by a small amount of a tri- or higher polyhydroxy compound and/or polycarboxylic acid such as triol and/or tricarboxylic acid in order to allow the melting point (Tm) to fall within the temperature range.

Examples of polyester resin (A) that satisfies requirement (A-1) and requirement (A-2) include polybutylene terephthalate (PBT), polytrimethylene terephthalate (PTT), polybutylene naphthalate (PBN), and a polyethylene isophthalate/terephthalate copolymer. In particular, polybutylene terephthalate (PBT) is preferable from the viewpoint of more enhancements in mechanical properties, heat resistance, processability, and electric properties.

Polyester resin (A) preferably satisfies the following requirement (A-3).

Requirement (A-3): the number average molecular weight (Mn) is 10,000 to 50,000 and the weight average molecular weight (Mw) is 60,000 to 300,000 in terms of polystyrene measured by gel permeation chromatography (GPC).

A polyester resin that satisfies requirement (A-3) is preferable because such a resin is excellent in mechanical properties, heat resistance, and processability.

### 2. Polymer (B)

The resin composition of the present invention may include only one polymer (B), or may include two or more polymers (B), provided that the following requirements (B-1) and (B-2) are satisfied.

Requirement (B-1): the melt viscosity at 160°C is 10 to 10,000 mPa·s. The melt viscosity at 160°C of polymer (B) preferably falls within the range of 20 to 5,000 mPa·s, more preferably 30 to 2,500 mPa·s, further preferably 50 to 1,000 mPa·s, particularly preferably 100 to 800 mPa·s.

When the melt viscosity at 160°C of polymer (B) falls within the range, polymer (B) is easily compatible with polyester resin (A). Therefore, polymer (B) is more uniformly dispersed in the resin composition, therefore a resin composition having more sufficient impact resistance is obtained, and molding processability of the resin composition, specifically, kneading properties, molding processability in injection molding, and the like are also improved.

Requirement (B-2): 5 to 100mass% of a styrene compound-derived constituent unit is contained. The content of such a unit is preferably 10 to 100mass%, more preferably 30 to 90mass%, further preferably 40 to 80mass%.

While the reason is not clear, polyester resin (A) is easily compatible with polymer (B) and polymer (B) is easily finely dispersed in polyester resin (A) when polymer (B) has the above constituent unit. Moreover, polymer (B) has an aromatic ring, and therefore the rate of volume shrinkage of the resin composition in injection molding of the resin composition is lower. Therefore, it is presumed that impact resistance of the resin composition is enhanced by retention of the interface strength between polyester resin (A) and inorganic filler (C) in a molded article.

It is also considered that polymer (B) having a relatively low viscosity as compared with polyester resin (A) is compatible with polyester resin (A), thereby resulting in an enhancement in fluidity of the resin composition, to enhance molding processability more. Moreover, fluidity of the resin composition can also be enhanced in injection molding of the resin composition, resulting in an improvement in molding processability and also suppression of fracture of inorganic filler (C) due to a shear force in a mold. That is, it is presumed that, when inorganic filler (C) is a fiber, the fiber length is maintained to result in enhancements in tensile strength and elastic modulus.

Examples of the styrene compound include styrene, α-methylstyrene, o-methylstyrene, p-methylstyrene, m-methylstyrene, p-chlorostyrene, m-chlorostyrene and p-chloromethylstyrene, 4-vinylpyridine, 2-vinylpyridine, 5-ethyl-2-vinylpyridine, 2-methyl-5-vinylpyridine, 2-isopropenylpyridine, 2-vinylquinoline, 3-vinylisoquinoline, N-vinylcarbazole, N-vinylpyrrolidone, and isopropenyltoluene.

Polymer (B) preferably satisfies also physical properties below.

The softening point of polymer (B), measured according to JIS K2207, is preferably 70 to 150°C, more preferably 80 to 140°C, further preferably 90°C to 130°C, particularly preferably 95°C to 115°C. The softening point of polymer (B) preferably falls within the range because polymer (B) is easily compatible with and more uniformly dispersed in polyester resin (A) and therefore a resin composition having more sufficient impact resistance and excellent processability is obtained.

The density of polymer (B), measured according to a density gradient tube method, preferably falls within the range of 900 to 1,200 kg/m³, more preferably 910 to 1,180 kg/m³, further preferably 920 to 1,160 kg/m³, particularly preferably 930 to 1,120 kg/m³, especially preferably 935 to 1,100 kg/m³. The density preferably falls within the range because polymer (B) is easily compatible with and more uniformly dispersed in polyester resin (A) and therefore a resin composition having more sufficient impact resistance and excellent processability is obtained.

### 2-1. Preferable Aspect of Polymer (B)

Polymer (B) is preferably a styrene-modified product of a homopolymer or copolymer of at least one selected from ethylene and C₃₋₁₂ α-olefin (hereinafter, also simply referred to "olefin wax" or "unmodified olefin wax").

Polymer (B) in the present aspect is considered as follows: the olefin component of polymer (B) finely dispersed aggregates, resulting in an enhancement in toughness of the resin composition to result in more enhancements in impact resistance and tensile strength.

In the present aspect, polymer (B) satisfies the following (B-3).

Requirement (B-3): 10 to 70mass%, preferably 15 to 65mass% of a styrene compound-derived constituent unit is contained.

The content rate of the styrene compound-derived constituent unit can be calculated as the proportion of the styrene compound based on the total amount of olefin-based wax and the styrene compound. Such styrene compounds may be used singly or in combinations of a plurality thereof. The content can also be calculated from the amount ratio of the peak derived from ethylene and the peak derived from the styrene compound in ¹³C-NMR spectral analysis.

More preferably, polymer (B) is a styrene-modified product of a copolymer mainly made of ethylene, the copolymer including ethylene and at least one α-olefin selected from C₃₋₁₂ α-olefin, and satisfies the following (B-3').

Requirement (B-3'): 50 to 70mass% of a styrene-derived constituent unit is contained.

When the content rate of the styrene-derived constituent unit falls within the range described in (B-3) or (B-3'), polymer (B) is more uniformly dispersed in polyester resin (A), therefore a resin composition having more sufficient impact resistance is obtained, and processability and kneading properties of the resin composition are also improved.

Polymer (B) preferably satisfies the following requirement (B-4).

Requirement (B-4): the crystallinity falls within the range of 10% or more and 70% or less. The crystallinity is preferably 15% or more and 65% or less, more preferably 20% or more and 60% or less, particularly preferably 25% or more and 55% or less. It is considered that polymer (B) which satisfies requirement (B-4) is favorable in dispersibility in polyester resin (A) when crystallized, and easier to enhance impact resistance of the resin composition.

### <Unmodified Olefin Wax>

The unmodified olefin wax is a homopolymer or copolymer of at least one selected from ethylene and C₃₋₁₂ α-olefin, and examples of the C₃₋₁₂ α-olefin include C₃ propylene, C₄ 1-butene, C₅ 1-pentene, C₆ 1-hexene, 4-methyl-1-pentene, and C₈ 1-octene. The unmodified olefin wax is preferably a homopolymer or copolymer of at least one selected from ethylene, propylene, 1-butene, 1-hexene, and 4-methyl-1-pentene. The content proportion of the constituent unit can be determined by ¹³C-NMR spectral analysis.

### (Polyethylene Wax)

When the unmodified olefin wax is polyethylene wax, such polyethylene wax is preferably polyethylene wax described in, for example, Japanese Patent Application Laid-Open No. 2009-144146. Particularly preferable polyethylene wax will be described below.

The polyethylene wax is preferably an ethylene homopolymer, or a copolymer mainly made of ethylene, the copolymer including ethylene and C₃₋₁₂ α-olefin.

Examples of the ethylene homopolymer include high-density polyethylene wax, medium-density polyethylene wax, low-density polyethylene wax, and linear low-density polyethylene wax.

### (Other wax)

On the other hand, when the unmodified olefin wax is a copolymer of ethylene and C₃₋₁₂ α-olefin, the amount of an ethylene-derived constituent unit is preferably 91.0 to 99.9mol%, more preferably 93.0 to 99.9mol%, further preferably 95.0 to 99.9mol%, particularly preferably 95.0 to 99.0mol%, and the amount of a C₃ or more α-olefin-derived constituent unit is preferably 0.1 to 9.0mol%, more preferably 0.1 to 7.0mol%, further preferably 0.1 to 5.0mol%, particularly preferably 1.0 to 5.0mol%. The total of the ethylene-derived constituent unit and a C₃₋₁₂ α-olefin-derived constituent unit is preferably 100mol%. While it is not denied that any constituent unit other than ethylene or C₃₋₁₂ α-olefin is contained, the amount of such any other constituent unit is preferably 5mol% or less. The content proportion of the constituent unit can be determined by ¹³C-NMR spectral analysis.

Examples of the C₃₋₁₂ α-olefin here include those described above. In particular, a copolymer of propylene or 1-butene and ethylene imparts favorable surface properties to a molded product because modified olefin wax tends to be hard and less sticky. In addition, a copolymer of propylene or 1-butene and ethylene is preferable from the viewpoint that mechanical strength and heat resistance of the resin composition are high. The reason why the modified olefin wax is thus hard and less sticky, while is not clear, is presumed because propylene and 1-butene allow for an efficient decrease in the melting point due to slight copolymerization as compared with other α-olefins, and thus tend to be high in crystallinity when compared with those having the same melting point. Such α-olefins may be used singly or in combinations of two or more thereof.

The unmodified olefin wax may be one obtained by pyrolysis of the 4-methyl-1-pentene/α-olefin copolymer disclosed in WO2011/055803, or may be the 4-methyl-1-pentene-based polymer shown in Japanese Patent Application Laid-Open No. 2015-028187.

### <Method for Producing Styrene Compound-Modified Product>

The styrene compound-modified product can be styrene-modified polyolefin wax obtained by, for example, subjecting the unmodified polyolefin wax to graft modification with styrene. Such a product can be prepared by a conventionally known method. For example, such a product can be obtained by melt-kneading (1) the unmodified polyolefin wax serving as a raw material, and (2) a styrene compound or sulfonic acid salt of a styrene compound in the presence of (3) a polymerization initiator such as organic peroxide.

The melt-kneading is made using, for example, an autoclave, a Henschel mixer, a V-type blender, a tumbler blender, a ribbon blender, a single screw extruder, a multi-screw extruder, a kneader, a Bunbury mixer. In particular, an apparatus excellent in batch type melt-kneading performance, such as an autoclave, can be used to thereby provide polyolefin wax in which the respective components are more uniformly dispersed and reacted. A batch type apparatus is preferable in the present invention, as compared with a continuous apparatus, because a retention time is easily adjusted and the retention time can be long to thereby result in relatively easy enhancements in modification rate and modification efficiency.

Examples of the styrene compound include styrene, α-methylstyrene, o-methylstyrene, p-methylstyrene, m-methylstyrene, p-chlorostyrene, m-chlorostyrene and p-chloromethylstyrene, 4-vinylpyridine, 2-vinylpyridine, 5-ethyl-2-vinylpyridine, 2-methyl-5-vinylpyridine, 2-isopropenylpyridine, 2-vinylquinoline, 3-vinylisoquinoline, N-vinylcarbazole, N-vinylpyrrolidone, and isopropenyltoluene.

### 2-2. Others

Herein, polymer (B) above may be a commercially available product.

Polymer (B) may be a solid such as a powder, a tablet, or a block, or may be dispersed or dissolved in a solvent.

### 3. Inorganic Filler (C)

Inorganic filler (C) is not particularly limited, and any known inorganic filler can be used therefor. Examples include talc, mica, calcium carbonate, hydrotalcite, wollastonite, xonotlite, barium sulfate, calcium sulfate, calcium silicate, clay, a glass fiber, glass beads, a glass flake, a carbon fiber, carbon black, graphite, plaster, magnesium carbonate, magnesium oxide, titanium oxide, titanate such as potassium titanate, iron oxide, alumina, and also powders and fibers of metals such as zinc, copper, iron, aluminum, magnesium, silicon, and titanium. Furthermore, examples include a pumice powder, a pumice balloon, aluminum hydroxide, magnesium hydroxide, basic magnesium carbonate, dolomite, calcium titanate, calcium sulfite, asbestos, montmorillonite, bentonite, and molybdenum sulfide. Such materials can be used singly or as a mixture thereof. In particular, talc, mica, calcium carbonate, and a glass fiber are preferable, and a glass fiber is particularly preferable.

Inorganic filler (C) may have any shape such as particulate, plate-like, rod-like, fibrous, and whisker-like shapes. Inorganic filler (C) may be a product that is commercially available as a filler for a polymer. For example, the material may be a product that is commercially available in the form of any of a powder, a roving, a chopped strand, a compressed mass, a pellet (pelletized), and a granule. When inorganic filler (C) is talc, one formed into a powder, a compressed mass, or a granule is preferable. The resin composition of the present invention may include only one inorganic filler (C), or may include two or more inorganic fillers (C).

Inorganic filler (C), when is a particle, preferably has an average particle size of 1 to 15 µm, more preferably 3 to 14 µm. The average particle size is a value measured by a laser diffraction method.

Inorganic filler (C) is produced by any of various known production methods. For example, in the case of talc, the material can be produced by pulverizing a raw stone of talc by an impact type pulverizer or a micron mill type pulverizer, or by further pulverizing such a raw stone pulverized, by a jet mill or the like, and then classifying and adjusting the resultant by a cyclone, a micron separator or the like.

Inorganic filler (C) may be untreated, or at least one portion thereof may be surface-treated. Examples of a surface treatment agent include an organic titanate-based coupling agent, an organic silane coupling agent, a modified polyolefin obtained by grafting of an unsaturated carboxylic acid or an anhydride thereof, fatty acid, a fatty acid metal salt, and fatty acid ester. Such surface treatment agents may be used singly or in combinations of two or more thereof.

### 4. Copolymer (D)

Copolymer (D) that preferably is low in the content or is not contained in the resin composition of the present invention will be described. Copolymer (D) is a copolymer having an olefin-derived structural unit, an α,β-unsaturated carboxylic-acid-ester-derived structural unit, and a structural unit having a cyclic oxyhydrocarbon structure. Copolymer (D) can be generally used as an impact resistance modifier.

The content of copolymer (D) is usually less than 3 parts by mass, preferably less than 2 parts by mass, more preferably less than 1.3 parts by mass, further preferably less than 1 part by mass, further preferably less than 0.5 parts by mass, particularly preferably less than 0.2 parts by mass based on 100 parts by mass of the total content of (A), (B) and (C).

The content of copolymer (D) preferably falls within the range because the elastic modulus or the tensile strength of the resin composition is enhanced.

Examples of the olefin of the olefin-derived structural unit that constitutes copolymer (D) include ethylene, propylene, 1-butene, 1-hexene, 1-octene, and 1-decene, and ethylene is generally adopted. Examples of the α,β-unsaturated carboxylic acid ester of the α,β-unsaturated carboxylic-acid-ester-derived structural unit include acrylates such as methyl acrylate, ethyl acrylate, and butyl acrylate, and methacrylates such as methyl methacrylate and ethyl methacrylate, and methyl acrylate is generally adopted. Examples of the structural unit having a cyclic oxyhydrocarbon structure include an α,β-unsaturated carboxylic acid glycidyl ester-derived structural unit. Examples of the α,β-unsaturated carboxylic acid glycidyl ester include acrylic acid glycidyl ester and methacrylic acid glycidyl ester, and methacrylic acid glycidyl ester is generally adopted.

Examples of copolymer (D) include an ethylene/methyl acrylate (methyl acrylate)/glycidyl methacrylate copolymer represented by the following structural formula. 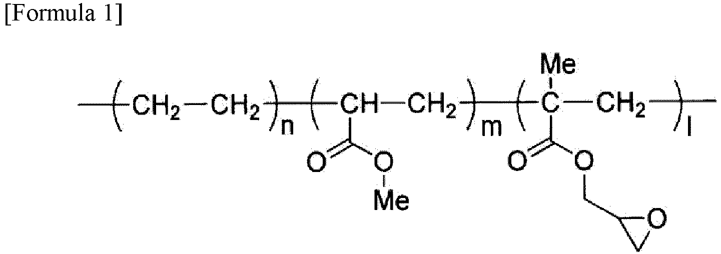 (In Formula, n, m, and 1 each represent an integer.)

Copolymer (D) represented by the formula usually includes an ethylene unit in a proportion of 30 to 99mass% based on the total amount (100mass%) of an ethylene unit, a methyl acrylate unit, and a glycidyl methacrylate unit. Copolymer (D) represented by the formula usually includes a methyl acrylate unit in a proportion of 0 to 60mass% based on the total amount (100mass%) of an ethylene unit, a methyl acrylate unit, and a glycidyl methacrylate unit. Copolymer (D) represented by the formula usually includes a glycidyl methacrylate unit in a proportion of 1 to 30mass% based on the total amount (100mass%) of an ethylene unit, a methyl acrylate unit, and a glycidyl methacrylate unit.

Copolymer (D) can include any copolymerization component other than the copolymerization components above. Specific examples of such other copolymerization component can include α,β-unsaturated glycidyl ethers such as allyl glycidyl ether and 2-methyl allyl glycidyl ether, aromatic vinyl compounds such as styrene, α-methylstyrene, 4-methylstyrene, 4-methoxystyrene, chlorostyrene, and 2,4-dimethylstyrene, and unsaturated vinyl esters such as vinyl acetate and vinyl propionate.

### 5. Other resin

The resin composition of the present invention may further include any resin other than polyester resin (A), polymer (B), and polymer (D) as long as the effects of the present invention are not remarkably impaired. The content of such other resin is not particularly limited, and is preferably about 0.1 to 30 parts by mass based on 100 parts by mass of polyester resin (A).

### 6. Other filler

The resin composition of the present invention may include any filler other than the inorganic filler, namely, a filler made of an organic substance (hereinafter, also referred to as "organic filler"). Examples of the organic filler include lignin, starch, a wood powder, woodfiber, bamboo, cotton, cellulose, natural fibers such as a nanocellulose fiber, and a product containing such a material.

The resin composition may include only one of such an organic filler, or may include two or more of such organic fillers. The content of such organic filler(s) is not particularly limited, and is preferably 70mass% or less, more preferably 30mass% or less, further preferably 20mass% or less in total based on 100mass% of the total mass of polyester resin (A) and polymer (B).

### 7. Other additive

The resin composition of the present invention may include any additive other than the filler. Examples of such other additive include a known additive in the polyolefin field. Specific examples of such an additive include a nucleating agent, an anti-blocking agent, a pigment, a dye, a lubricant, a foaming agent, a plasticizer, a release agent, an antioxidant, a flame retardant, an ultraviolet absorber, an anti-bacterial agent, a surfactant, an antistatic agent, a weathering stabilizer, a heat-resistant stabilizer, an anti-slipping agent, a foaming agent, a crystallization aid, an antifogging agent, an anti-aging agent, a hydrochloric acid absorber, an impact modifier, a crosslinking agent, a co-crosslinking agent, a crosslinking aid, an adhesive, a softening agent, and a processing aid.

The resin composition may include only one additive, or may two or more additives. The content of such additive(s) is not particularly limited as long as the object of the present invention is not impaired, and the content of each additive is preferably about 0.05 to 70mass% based on 100mass% of the total mass of polyester resin (A) and polymer (B). The upper limit is more preferably 30mass%.

### 8. Method for Producing Resin Composition

The resin composition of the present invention can be produced by dry blending or melt blending using any of various methods. A specific method can be, for example, a method where polyester resin (A), polymer (B), inorganic filler (C), and any other component(s) are blended at the same time or in any order by a tumbler blender, a V type blender, a Nauta mixer, a Bunbury mixer, kneading roll, a single screw or twin screw extruder, or the like. Alternatively, polyester resin (A), polymer (B), inorganic filler (C), and any other component(s) may be blended by dispersing or dissolving in any solvent and thereafter appropriate drying with natural drying, heating forced drying, or the like.

In general, melt blending is more preferable than dry blending from the viewpoint of appearance properties and impact resistance of a molded article obtained. In addition, appearance properties and impact resistance of a molded article obtained tend to be enhanced by sufficient kneading particularly with melt blending. In particular, when two or more compounds are used in combination as polymers (B), it is preferable in terms of handling that two or more polymers (B) be dry-blended or melt-blended in advance. As the method of melt blending, the above method, a method where a batch tank is used, or the like is appropriately used.

### 9. Physical Properties of Resin Composition

The bending elastic modulus of the resin composition of the present invention, measured according to JIS K7171, is preferably 8,000 MPa or more. The bending elastic modulus more preferably falls within the range of 8,000 to 10,000 MPa.

The Charpy impact strength at 23°C of the resin composition of the present invention, measured according to JIS K7111, is preferably 13.0 kJ/m² or more, more preferably 14.0 kJ/m² or more, further preferably 15.0 kJ/m² or more. The upper limit is usually 20.0 kJ/m² or less. Furthermore, the Charpy impact strength at -30°C is preferably 11.0 kJ/m² or more, more preferably 12.0 kJ/m² or more, further preferably 13.0 kJ/m² or more. The upper limit is usually 18.0 kJ/m² or less.

### B. Molded Article

The molded article of the present invention can be produced by molding the resin composition to a desired shape according to a conventionally known method such as injection molding, coating, extrusion molding, or compression molding. The shape of the molded article is not particularly limited, and is, for example, a film-like, plate-like, prismatic, or cylindrical shape. The molded article of the present invention can be used in any application that is the same as in a conventionally known polyester resin. Specifically, the molded article can be used in automobile components, home electronic components, and the like.

### Examples

The present invention will be described based on Examples in detail, but the present invention is not limited to such Examples.

### 1. Polyester Resin (A)

A polybutylene terephthalate resin, Duranex 2002 manufactured by WinTech Polymer Ltd., was used as polyester resin (A). As a result of measurement according to the following methods, polyester resin (A) had a melting point (Tm) of 225°C, a number average molecular weight (Mn) of 28,300, and a weight average molecular weight (Mw) of 83,300.

### <Melting Point>

Measurement was conducted using DSC-20 (manufactured by Seiko Instruments Inc.) according to a differential scanning calorimetric method (DSC). About 10 mg of a specimen was sealed in an aluminum pan and heated from 0°C to 280°C at 10°C/min, and the endothermic peak in a curve obtained was determined as the melting point. Before the temperature rise measurement, an operation where the specimen was heated to about 280°C once and kept for 5 minutes, and thereafter cooled to 0°C at 10°C/min was performed, to standardize the thermal history of the specimen. When a plurality of endothermic peaks were present in the curve obtained, the peak temperature where the maximum among the endothermic amounts at such endothermic peaks was observed was determined as the melting point (Tm).

### <Mn and Mw>

The number average molecular weight (Mn) and the weight average molecular weight (Mw) were determined from GPC measurement. The measurement was performed in the following conditions. The number average molecular weight Mn and the weight average molecular weight Mw were determined by the calibration curve obtained using commercially available monodispersed standard polystyrene.
Apparatus: 515 pump, 717 plus Autosampler (manufactured by Waters Corporation)
Solvent: chloroform
Column: PL gel 5 µ MIXED - D 7.5 × 300 mm × 2 (manufactured by Polymer Laboratories Limited)
Flow rate: 1.0 ml/min
Specimen: 1.2 mg/mL chloroform
Temperature: 40°C

### 2. Polymer (B)

B1 to B3 produced by a method described below were each used as polymer (B). In Comparative Examples, B'1 and B'2 produced by a method described below were each used as a polymer not falling under polymer (B), Lotader AX8900 manufactured by Arkema S.A. (D1) was used as impact resistance modifier (D), and Tafmer MH5020 manufactured by Mitsui Chemicals Inc. (D2) or EM505 (MBS) manufactured by LG Chem (D3) was used as other impact modifier.

The constitutions and physical properties thereof were analyzed by the following methods.

### <Constitution of Polymer Before Modification>

The content proportions of an ethylene-derived constituent unit and a C₃₋₄ α-olefin-derived constituent unit of each polymer before modification were determined by ¹³C-NMR spectral analysis. In Table 1, C2 means ethylene, and C3 means propylene.

### <Melt Viscosity at 160°C>

Measurement was conducted with a digital viscometer manufactured by Brookfield Engineering Labs, Inc., in conditions of an amount of a specimen of about 8 g and a measurement temperature of 160°C.

### <Softening Point>

Measurement was conducted by a ring-and-ball method according to JIS K2207.

### <Density>

Measurement was conducted according to JIS K7112.

### <Crystallinity>

A measurement sample was hot-pressed at 180°C for 5 minutes, and then cold-pressed with water cooling for 5 minutes, thereby producing a press sheet having a thickness of 1 mm. The resulting press sheet was subjected to measurement of an X-ray profile by a transmission method with an X-ray diffraction apparatus (RINT 2500 manufactured by Rigaku Corporation) having a rotation specimen stage, in conditions of 50 kV-300 mA. After peaks were assigned as crystalline or amorphous from the resulting X-ray profile, the crystallinity was calculated.

### <Acid Value>

Measurement was conducted according to JIS K5902. Herein, an acid value of 11 mgKOH/g is converted into a content rate of a polar group of 1mass%.

### [Production Example 1]

### Production of B1

A glass reactor was charged with 300 g of unmodified olefin wax (B'1) described below, and the wax was molten at 160°C under a nitrogen atmosphere. Next, 450 g of styrene and 19 g of di-t-butyl peroxide (hereinafter, abbreviated as "DTBPO") were continuously fed to the reaction system (temperature: 160°C) over 6 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B1. Physical properties are shown in Table 1.

### [Production Example 2]

### Production of B2

A glass reactor was charged with 600 g of unmodified olefin wax (B'1) described below, and the wax was molten at 160°C under a nitrogen atmosphere. Next, 150 g styrene and 6 g of di-t-butyl peroxide (hereinafter, abbreviated as "DTBPO") were continuously fed to the reaction system (temperature: 160°C) over 3 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B2. Physical properties are shown in Table 1.

### [Production Example 3]

### Production of B3

A glass reactor was charged with 630 g of unmodified olefin wax obtained by adjusting the amounts of propylene and hydrogen loaded, as production conditions of unmodified olefin wax (B'1), described below, and the wax was molten at 160°C under a nitrogen atmosphere. Next, 70 g of styrene and 3 g of di-t-butyl peroxide (hereinafter, abbreviated as "DTBPO") were continuously fed to the reaction system (temperature: 160°C) over 2 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B3. Physical properties are shown in Table 1.

### [Production Example 4]

### Production of B'1

### 1. Preparation of Catalyst

In a glass autoclave having an inner volume of 1.5 L, 25 g of commercially available anhydrous magnesium chloride was suspended in 500 ml of hexane. While the resulting suspension was kept at 30°C and stirred, 92 ml of ethanol was dropped thereinto over 1 hour, and then a reaction was allowed to run for additional 1 hour. After completion of the reaction, 93 ml of diethyl aluminum monochloride was dropped over 1 hour, and a reaction was allowed to run for additional 1 hour. After completion of the reaction, 90 ml of titanium tetrachloride was dropped, and a reaction vessel was heated to 80°C to allow a reaction to run for 1 hour. After completion of the reaction, a solid portion was washed with hexane by decantation until no free titanium was detected. The resultant was defined as a hexane suspension and subjected to quantitative determination of the titanium concentration by titration, and was subjected to the following experiments.

### 2. Production of Ethylene/Propylene Copolymer (Unmodified Olefin Wax B'1)

A stainless autoclave having an inner volume of 2 L, sufficiently purged with nitrogen, was charged with 930 ml of hexane and 70 ml of propylene, and hydrogen was introduced thereinto until a pressure of 20.0 kg/cm² (gauge pressure) was achieved. Next, the temperature in the system was raised to 170°C, and thereafter 0.1 mmol of triethyl aluminum , 0.4 mmol of ethyl aluminum sesquichloride , and the suspension of the resulting solid in hexane were injected with ethylene so that the amount of a titanium component, in terms of atoms, was 0.008 mmol, thereby initiating polymerization.

Thereafter, only ethylene was continuously fed to thereby keep the total pressure at 40 kg/cm² (gauge pressure), and polymerization was performed at 170°C for 40 minutes.

After a small amount of ethanol was added into the system to terminate polymerization, and unreacted ethylene and propylene were purged. The resulting polymer solution was subjected to drying at 100°C under reduced pressure overnight to obtain an ethylene/propylene copolymer. The polymer was defined as B'1.

### [Production Example 5]

### Production of B'2

A glass reactor was charged with 500 g of unmodified olefin wax (B'1), and the wax was molten at 160°C under a nitrogen atmosphere. Next, 30 g of maleic anhydride and 3 g of di-t-butyl peroxide (hereinafter, abbreviated as "DTBPO") were continuously fed to the reaction system (temperature: 160°C) over 5 hours. Thereafter, a heating reaction was allowed to run for additional 1 hour, a degassing treatment was then conducted in a vacuum of 10 mmHg for 0.5 hours with the molten state being kept, thereby removing the volatile content, and thereafter the resultant was cooled to obtain B'2. Physical properties are shown in Table 1.

In the constitution in Table 1, "C2" represents an ethylene-derived constituent unit, and "C3" represents a propylene-derived constituent unit, respectively. In addition, "C3: 4mol%" represents inclusion of 4mol% of a propylene-derived constituent unit.

**[Table 1]**

| Polymer (B) | | B1 | B2 | B3 | B'1 | B'2 |
|---|---|---|---|---|---|---|
| Modification | | Styrene-modified | Styrene-modified | Styrene-modified | Unmodified | Acid-modified |
| Synthesis method | | Polymerization | Polymerization | Polymerization | Polymerization | Polymerization |
| Constitution (unmodified) | | C2/C3 | C2/C3 | C2/C3 | C2/C3 | C2/C3 |
| | | C3:4mol% | C3:4mol% | C3:4mol% | C3:4mol% | C3:4mol% |
| Content of styrene-derived structural unit (charging ratio) | | 60wt% | 20wt% | 10wt% | 0wt% | 0wt% |
| Melt viscosity at 160°C | mPa·s | 500 | 35 | 1000 | 15 | 100 |
| Softening point | °C | 105 | 108 | 124 | 113 | 108 |
| Density | kg/m3 | 997 | 940 | 956 | 922 | 938 |
| Crystallinity | % | 30 | 58 | 70 | 80 | 60 |
| Acid value | mgKOH/g | 0 | 0 | 0 | 0 | 60 |

### 3. Inorganic Filler (C)

A glass fiber (CSF3PE-941S manufactured by Nitto Boseki Co., Ltd.) was used as inorganic filler (C).

### [Example 1 and Comparative Examples 1 to 7]

### (Production of Resin Composition)

Polyester resin (A), as well as polymer (B), a polymer not falling under polymer (B), or impact resistance modifier (D), and other impact modifier were dry-blended at each compounding ratio shown in Table 2, and loaded through a hopper. The blended product was melt-kneaded with a co-rotation twin screw extruder, HK25D manufactured by Parker Corporation, Inc. (φ25 mm, L/D = 41) in condition of a number of screw rotations of 120 rpm, an amount of feed of 10 kg/h, and an exit temperature of 260°C. Then the resultant was water-cooled to form a strand. The glass fiber used as inorganic filler (C) was loaded through a side feeder. Such a melt-kneaded product was cut to produce a pellet.

Each resin composition obtained was evaluated according to the following criteria. The results are shown in Table 2.

### (Evaluation of Resin Composition)

### [Evaluation of Processability]

### <Torque>

The torque value of the twin screw extruder was measured at the time of stabilization of a running state after 10 minutes from the start of melt-kneading.

### <Spiral Flow>

The resulting pellet-shaped resin composition was dried at 120°C for 5 hours, and then injected with an injection molding machine (EC60NII manufactured by Toshiba Machine Co., Ltd.) in conditions of a cylinder temperature of 260°C, a number of screw rotations of 150 rpm, an injection pressure of 100 MPa, and a mold temperature of 80°C, and the flow length of the resin was measured using a mold having a thickness of 2 mm. The spiral flow was evaluated from the resulting flow length according to the following criteria.
A: the flow length was 31 cm or more
B: the flow length was 30 cm or more and less than 31 cm
C: the flow length was less than 30 cm

### <Mold Releasability>

The resulting pellet-shaped resin composition was dried at 120°C for 5 hours and then injected with an injection molding machine (PNX60 manufactured by Nissei Plastic Industrial Co., Ltd.) in conditions of a cylinder temperature of 250°C, a number of screw rotations of 80 rpm, an injection pressure of 140 MPa, and a mold temperature of 90°C, thereby producing a test piece having a cup shape (φ50 mm × h 50 mm × t 1.6 mm). An ejector was operated, and the stress applied in releasing of such a molded product having a cup shape from a mold, was measured by a pressure sensor. The mold releasability was evaluated from the stress for releasing, according to the following criteria.
A: the stress for releasing was less than 10 MPa
B: the stress for releasing was 10 MPa or more and less than 20 MPa
C: the stress for releasing was 20 MPa or more
D: the molded product was not released from the mold

### [Production of Test Piece]

The resulting pellet-shaped resin composition was dried at 120°C for 5 hours, and thereafter injected with an injection molding machine (Niigata NN100 manufactured by Niigata Machine Techno Co., Ltd.) in conditions of a cylinder temperature of 250°C, a number of screw rotations of 75 rpm, an injection pressure of 140 MPa, and a mold temperature of 75°C, thereby producing a test piece.

### [Evaluation of Test Piece]

The resulting test piece was evaluated with respect to the Charpy impact test (at 23°C and -30°C), the tensile test (tensile strength and elongation), and the bending test (bending strength and bending elastic modulus), as described below. The evaluation results are shown in Table 2.

### <Charpy Impact Test>

The Charpy impact test was performed at 23°C and -30°C according to JIS K7111. A notch was machined, and the test piece had a size of 10 mm (width) × 4 mm (thickness) × 80 mm (length).

### <Tensile Test (Tensile Strength and Elongation)>

The tensile strength and the tensile elongation rate were measured based on JIS K-7162 in conditions of a load range of 2 kN and a test speed of 50 mm/min.

### <Bending Test (Bending Strength and Bending Elastic Modulus)>

The bending strength and the bending elastic modulus were measured based on JIS K-7171 in conditions of a load range of 200 N, a test speed of 2 mm/min, and a bending span of 64 mm.

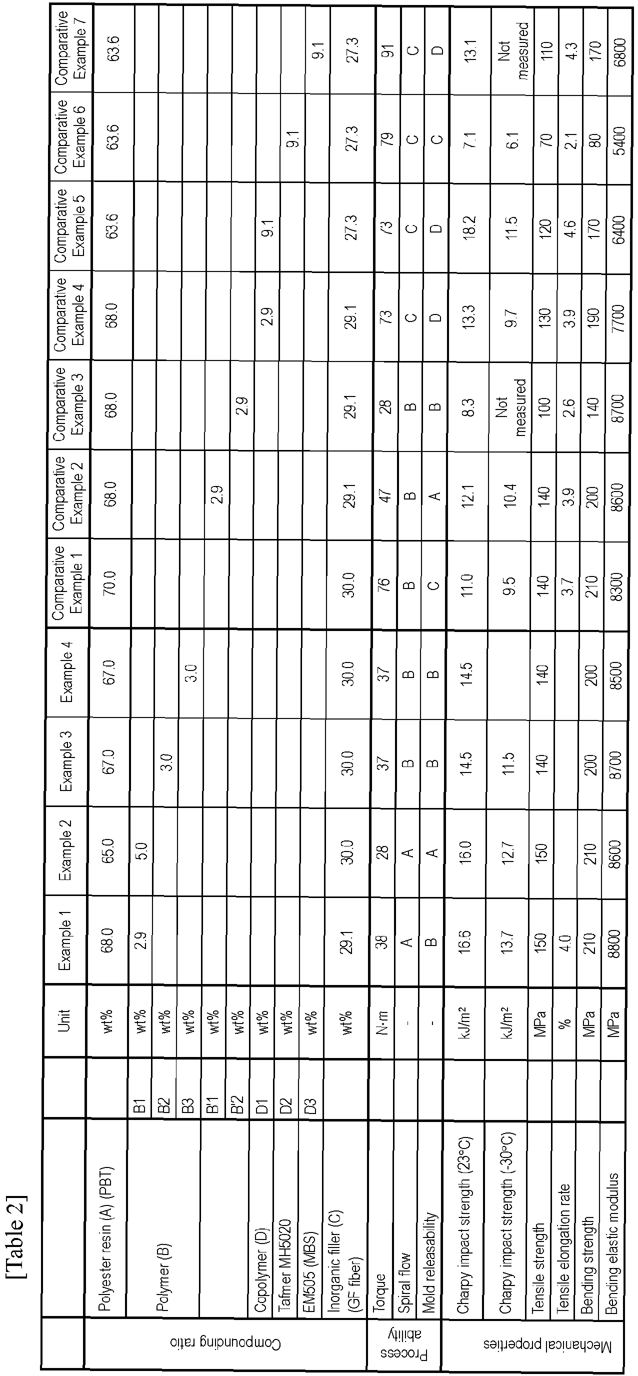

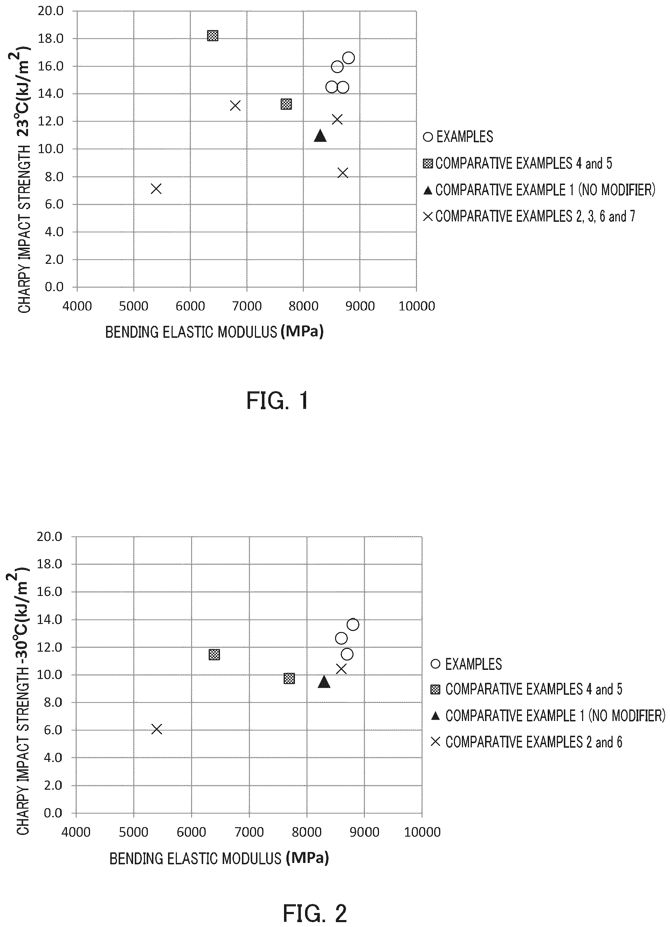

The graphs each plotting a relationship between the bending elastic modulus and the Charpy impact strength of each of the resin compositions obtained in Examples and Comparative Examples are illustrated in FIG. 1 (Charpy impact strength at 23°C) and FIG. 2 (Charpy impact strength at -30°C).

Any resin composition containing polyester resin (A), polymer (B), and inorganic filler (C) at a predetermined proportion was high in all impact resistance, tensile strength, and elastic modulus, as shown in Table 2, FIG. 1, and FIG. 2. In addition, any resin composition containing polyester resin (A), polymer (B), and inorganic filler (C) at a predetermined proportion was low in torque, namely, excellent in mechanical properties and molding processability.

On the contrary, the impact resistance of any resin composition not containing polymer (B), but containing a polymer not falling under polymer (B) or impact resistance modifier (D) instead, was not sufficiently enhanced, or the impact resistance was enhanced but the tensile strength or elastic modulus was decreased.

The present application claims the priority based on Japanese Patent Application No. 2016-202818 filed on October 14, 2016, and the contents described in the claims, specification and drawings of the Application are herein incorporated.

### Industrial Applicability

The resin composition of the present invention can be enhanced in all of impact resistance, tensile strength, elastic modulus, and molding processability. Therefore, the resin composition of the present invention can be applied to various resin molded articles.

## Claims

1. A resin composition containing a polyester resin (A), a polymer (B), and an inorganic filler (C), wherein
the resin composition comprises 50 to 95 parts by mass of (A), 0.5 to 10 parts by mass of (B), and 5 to 40 parts by mass of (C), provided that a total content of (A), (B) and (C) is 100 parts by mass,
(A) satisfies the following (A-1) and (A-2), and
(B) satisfies the following (B-1) and (B-2),
(A-1) an aromatic dicarboxylic acid-derived constituent unit (a1) and a C₂₋₁₀ diol-derived constituent unit (a2) are contained, and
(A-2) a melting point (Tm) according to a differential scanning calorimeter (DSC) falls within the range of 200 to 245°C;
(B-1) a melt viscosity at 160°C is 10 to 10,000 mPa·s, and
(B-2) 5 to 100mass% of a styrene compound-derived constituent unit is contained.

2. The resin composition according to claim 1, wherein (B) is a styrene compound-modified product of a homopolymer or copolymer of at least one selected from ethylene and C₃₋₁₂ α-olefin, and satisfies the following (B-3),
(B-3) 10 to 70mass% of a styrene compound-derived constituent unit is contained.

3. The resin composition according to claim 1, wherein (B) is a styrene-modified product of a copolymer of ethylene and at least one α-olefin selected from C₃₋₁₂ α-olefin, and satisfies the following (B-3'),
(B-3') 50 to 70mass% of a styrene-derived constituent unit is contained.

4. The resin composition according to any one of claims 1 to 3, containing a glass fiber as (C).

5. The resin composition according to any one of claims 1 to 4, containing polybutylene terephthalate as (A).

6. The resin composition according to any one of claims 1 to 5, comprising 55 to 80 parts by mass of (A), 2 to 5 parts by mass of (B), and 20 to 40 parts by mass of (C), provided that a total content of (A), (B) and (C) is 100 parts by mass.

7. The resin composition according to any one of claims 1 to 6, wherein a content of copolymer (D) having an olefin-derived structural unit, an α,β-unsaturated carboxylic acid ester-derived structural unit, and a structural unit having a cyclic oxyhydrocarbon structure is less than 3 parts by mass based on 100 parts by mass of the total content of (A), (B), and (C).

8. A molded article comprising the resin composition according to any one of claims 1 to 7.
